# EUROPÄISCHE PATENTSCHRIFT

(11) **EP 1 231 421 B1**
(45) Veröffentlichungstag und Bekanntmachung des Hinweises auf die Patenterteilung: **31.08.2005**
(21) Anmeldenummer: 02001388.4
(22) Anmeldetag: 19.01.2002
(51) Int. Cl.: F16K 17/19

(54) **Dichtungsventilanordnung**
Sealing valve
Clapet d'étanchéité

(30) Priorität: 25.01.2001 DE 10103275
(43) Veröffentlichungstag der Anmeldung: 14.08.2002
(73) Patentinhaber: Busak + Shamban Deutschland GmbH, 70565 Stuttgart (DE)
(72) Erfinder: Bauer, Jürgen, 72076 Tübingen (DE)
(74) Vertreter: Kohler Schmid Möbus

(56) Entgegenhaltungen:
- GB-A- 721 939
- US-A- 2 133 575
- US-A- 3 430 648
- US-A- 4 711 435
- US-A- 4 922 954
- US-A- 4 944 425

## Beschreibung

Die Erfindung betrifft eine Anordnung mit einem Dichtungsventil zum Druckausgleich innerhalb eines ein Fluid enthaltenden Behälters.

### Stand der Technik

Eine Dichtungsventilanordnung mit einem Dichtungsventil ist beispielsweise durch die DE 41 35 711 C2 bekannt geworden.

Zellen von Akkumulatorbatterien benötigen ein Dichtungsventil, welches das Austreten von Batteriesäure und Gas bei normalen Druckverhältnissen sicher verhindert, sich bei definierten Überdrücken innerhalb der Batteriezelle öffnet und eine Entgasung gestattet. Solche Akkumulatorbatterien, insbesondere Bleiakkumulatoren für Kraftfahrzeuge, sind Massenartikel, deren Dichtungsventile möglichst kostengünstig hergestellt werden müssen.

Bei dem bekannten Dichtungsventil wird durch den Steuerkanal ein definierter Strömungsweg für Fluide bereitgestellt, der an einem Dichtungswulst endet. Aus diesem Grund wird eine definierte Druckbeaufschlagung dieser Soll-Entgasungsstelle möglich. Daraus resultiert ein verbessertes, kontrollierteres und feinfühligeres Ansprechverhalten.

Beispielsweise wird bei Tankdeckeln von Motorsägen eine Ventilfunktion bei einem Überdruck und einem Unterdruck zum Druckausgleich im Behälter benötigt.

US 4 922 954 offenbart ein Dichtungsventil mit ersten und zweiten Dichtungskanten, das auf einen Über- und einen Unterdruck reagieren kann.

### Aufgabe der Erfindung

Aufgabe der Erfindung ist es, das Ansprechverhalten des bekannten Dichtungsventils bei Über- oder Unterdruck zu verbessern.

### Gegenstand und Vorteile der Erfindung

Diese Aufgabe wird durch eine Dichtungsventilanordnung gemäß dem Anspruch 1 gelöst. Die Dichtungsventilanordnung ist für einen ein Fluid enthaltenden Behälter geeignet, über dessen Fluidaufnahmeraum ein Stützelement mit einem Steuerkanal im Randbereich des Stützelements und ein Sicherungselement mit einem Durchgangskanal übereinander angeordnet sind. Weiterhin ist zwischen dem Stützelement und dem Sicherungselement ein Dichtungsventil aus gummielastischem Material mit einer gegenüber diesen Elementen kleineren radialen Erstreckung und mit einem Ventilkanal zur Verbindung des Steuerkanals und des Durchgangskanals vorgesehen. Das Dichtungsventil weist eine erste Dichtfläche oder -kante zur Abdichtung des Durchgangskanals gegenüber dem Steuerkanal und eine zweite Dichtfläche oder -kante zur Abdichtung des Ventilkanals gegenüber dem Steuerkanal auf. Die Dichtungsanordnung kann in zwei Richtungen, d. h. bei Überdruck und Unterdruck einen Ausgleich der Druckverhältnisse im Behälter gewährleisten. Beispielsweise kann durch die Dichtkanten, die Materialwahl und die Vorspannung ein Unterdruck von 100 mbar und ein Überdruck von 300 mbar ausgeglichen werden. Druckschwankungen innerhalb vorgegebener Grenzen können zuverlässig abgebaut werden. Die Dichtungsanordnung ist als Tankbe- und -entlüftungsventil oder für ähnliche Zwecke einsetzbar. Sie arbeitet richtungsabhängig mit verschiedenen Öffnungsdrücken. Der Behälter wird bis zu einem Druckniveau abgedichtet. Entsteht ein Unterdruck im Behälter öffnet die Dichtungsanordnung bei einem geringeren Druck als bei einem Überdruck. Die Dichtwirkung wird durch eine axiale Vorspannung erreicht. Der Querschnitt des Ventilkanals und die Stärke der ersten Dichtkante ist für die Höhe des Öffnungsdruckes verantwortlich. Entsteht Überdruck im Behälter, so öffnet die zweite Dichtkante am Stützelement und baut den Druck ab.

Gegenstand der Erfindung ist ein Dichtungsventil aus gummielastischem Material für Behälteröffnungen mit einem Ventilkanal und einer an seiner Oberseite beidseitig des Ventilkanals ausgebildeten umlaufenden ersten Dichtkante und an seiner Unterseite rings um den Ventilkanal ausgebildeten zweiten Dichtkante. Unterhalb der ersten Dichtkante sind erfindungsgemäß Materialaussparungen vorgesehen, über die das Ansprechverhalten des Dichtungsventil bei Unterdruck gesteuert werden kann.

Bei einer bevorzugten Ausführungsform der Erfindung ist das Stützelement durch einen Dichtkegel mit Schrägflächen ausgebildet, an denen die zweite Dichtkante aufsetzbar ist. Der Ventilkanal kann auf die Kegelspitze aufgesetzt werden, so dass eine montagefreundliche Anlage mit gutem Ansprechverhalten bei Überdruck kombiniert wird.

Die Ventilfunktion wird verstärkt, wenn das Stützelement beidseitig seiner Mittelachse jeweils einen Steuerkanal aufweist.

### Zeichnung

Ein Ausführungsbeispiel des erfindungsgemäßen Dichtungsventils und einer erfindungsgemäßen Dichtungsventilanordnung ist in der schematischen Zeichnung dargestellt und wird in der nachfolgenden Beschreibung erläutert. Es zeigen:
- **Fig. 1**: ein Dichtungsventil im Querschnitt;
- **Fig. 2**: das Dichtungsventil nach Fig. 1 in der Draufsicht auf dessen Unterseite;
- **Fig. 3**: eine Dichtungsanordnung mit eingebautem Dichtungsventil nach Fig. 1 und 2 im Querschnitt.

### Beschreibung des Ausführungsbeispiels

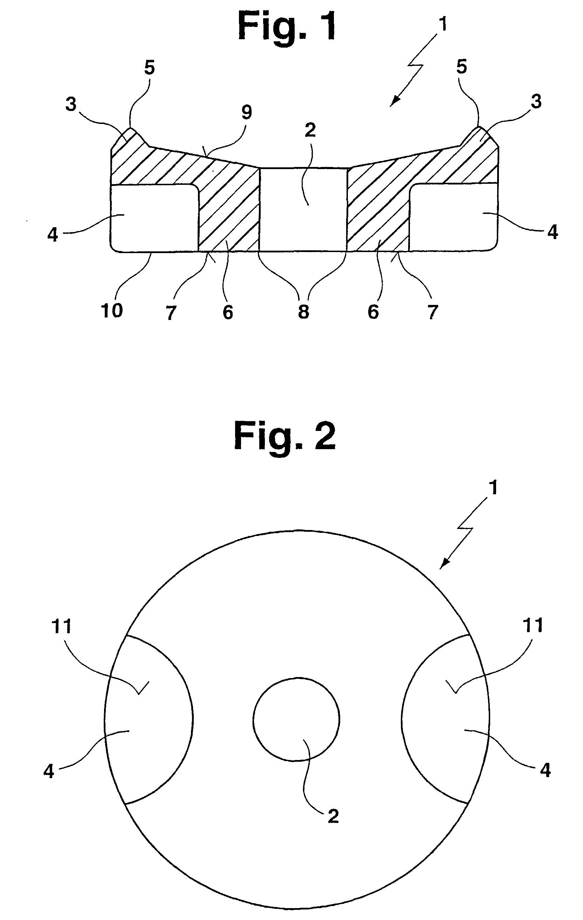

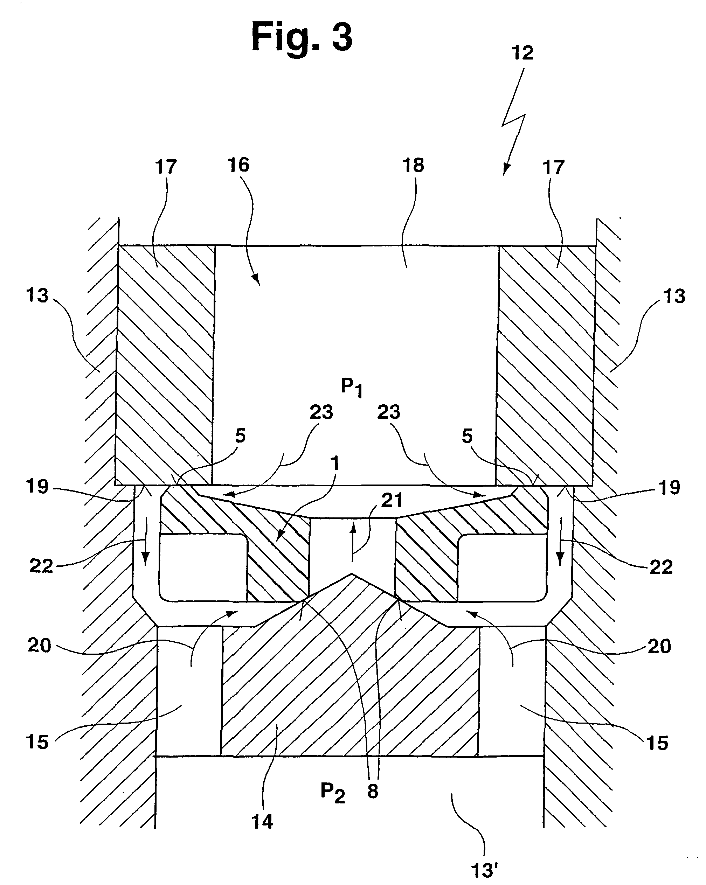

Aus der **Fig. 1** ist ersichtlich, dass ein Dichtungsventil 1 einen zentralen Ventilkanal 2 und beidseitig jeweils unterhalb eines umlaufenden Wulstes 3 zur Ausbildung von Soll-Entgasungsstellen vorgesehene Materialaussparungen 4 aufweist, wobei das Dichtungsventil 1 symmetrisch zu seiner Mittelachse, d. h. zum Ventilkanal 2, aufgebaut ist. Der ringförmige Wulst 3 endet in einer ersten Dichtkante 5. Ein Randbereich 6 begrenzt den Ventilkanal 2 und endet in einer Dichtfläche 7 bzw. einer zweiten Dichtkante 8. Das Dichtungsventil 1 kann gegen einen Fluiddruck abdichten, der sowohl an seiner Oberseite 9 als auch an seiner Unterseite 10 anliegt. Dabei können die erste und zweite Dichtkante 5 und 8 bzw. die Dichtfläche 7 eine Ventilfunktion bei einer Dichtungsventilanordnung übernehmen, wie sie beispielsweise in Fig. 3 dargestellt ist. Die zweite Dichtkante 8 wirkt mit der gekrümmten Oberseite 9 innerhalb der ersten Dichtkante 5 bei einem Überdruck im Fluidaufnahmeraum 13'im Behälter in einer Weise zusammen, dass die Dichtkante 8 zumindest an einer Stelle nachgeben und sich an den Schrägflächen eines Dichtkegels (siehe Fig. 3) ein Spalt öffnen kann (Soll-Entgasung bei einem Überdruck).

In der Draufsicht gemäß **Fig. 2** ist zu erkennen, dass die Materialaussparungen 4 eine begrenzte ausgesparte Steuerfläche 11 unterhalb des Wulstes bzw. der ersten Dichtkante besitzen. In die Materialaussparungen 4 kann ein Fluid einströmen und den Wulst bzw. die erste Dichtkante an einer Stelle gegen eine Anlagefläche drücken. Bei nachlassendem Fluiddruck ergibt sich eine durch die Materialaussparungen hervorgerufene Materialschwächung des Dichtungsventils 1 in diesem Bereich, die eine Ventilfunktion ermöglicht, weil die erste Dichtkante im der Steuerfläche 11 gegenüberliegenden Bereich nachgeben kann. Die Steuerflächen 11 definieren Bereiche einer beabsichtigen Soll-Entgasung bei einem Unterdruck im Fluidunterdruck im Behälter.

**Fig. 3** veranschaulicht den prinzipiellen Aufbau und die prinzipielle Wirkungsweise einer Dichtungsanordnung 12. Selbstverständlich sind erfindungsgemäße Abweichungen im Detail denkbar. Eine Gehäusewandung 13 dient der Aufnahme des Dichtungsventils 1 über einem Dichtkegel 14, durch den ein Stützelement ausgebildet wird und der Teil des Gehäuses sein kann oder durch ein separates Bauteil ausgebildet ist, das über einem Fluidaufnahmeraum 13'austauschbar angeordnet ist. Der Dichtkegel 14 besitzt beidseitig Steuerkanäle 15, über die ein Fluid bis zu der rings umlaufenden zweiten Dichtkante 8 und den Steuerflächen 11 vordringen kann. Die Dichtkante 8 liegt federnd an Schrägflächen des Dichtkegels 14 vorgespannt an, weil das Dichtungsventil 1 aus einem gummielastischen Werkstoff gefertigt ist. Prinzipiell sind alle gummielastischen Werkstoffe zur Herstellung des erfindungsgemäßen Dichtungsventils 1 geeignet. Bevorzugt werden jedoch beispielsweise Fluorelastomere FPM, FKM sowie auch Siliconkautschukmaterialien verwendet. Über dem Dichtungsventil 1 befindet sich ein Sicherungselement 16, welches das eingebaute Dichtungsventil 1 ortsfest positioniert, vorspannt und einen von Rändern 17 begrenzten Durchgangskanal 18 aufweist. Auch das Sicherungselement 16 kann integrierter Bestandteil des Gehäuses und mit der Gehäusewandung 13 fest verbunden sein. An Anlageflächen 19 des Sicherungselements 16 liegt die erste Dichtkante 5 des eingebauten Dichtungsventil 1 federnd an. Die federnde Anlage wird durch die Materialaussparungen 4 unterstützt. Das Dichtungsventil 1 kann doppelt wirken, d. h. es kann in beiden Richtungen auf Druckänderungen reagieren. Durch die Pfeile 20 bis 23 sind Strömungsmöglichkeiten eines Fluids angedeutet. Es kommt darauf an, ob ein Fluiddruck P₁ größer als ein Fluiddruck P₂ oder umgekehrt vorhanden ist. Falls P₁ größer P₂ ist und somit ein Unterdruck im Fluidaufnahmeraum 13'existiert, kann sich die erste Dichtkante 5 zumindest an einer Stelle von der Anlagefläche 19 lösen und einem Fluid einen Weg in Pfeilrichtung 23 und 22 freigeben. Wird der Unterdruck ausgeglichen, kehrt die erste Dichtkante 5 in ihre Ausgangslage zurück und dichtet wieder ab. Sofern P₂ größer P₁ vorliegt, hebt die zweite Dichtkante 8 von den Kegelflächen ab und gibt den Weg in Pfeilrichtung 20 und 21 über einen entstehenden Spalt an den Schrägflächen des Dichtkegels frei. Nach Ausgleich des Druckes stellt sich die zweite Dichtkante 8 in die Ausgangslage zurück und dichtet erneut den Fluidaufnahmeraum 13'ab.

Zur definierten Ausbildung des Ansprechverhaltens des Dichtungsventils 1 kommen als Parameter in Betracht: Die Abmessungen der an der Anlagefläche 19 anliegenden Absätze 3, die Steifigkeit des Materials, die Querschnittsfläche der Aussparungen 4 und des Ventilkanals 2 und die Gestaltung des Dichtkegels 14.

### BEZUGSZEICHENLISTE

- 1: Dichtungsventil
- 2: Ventilkanal
- 3: Wulst
- 4: Aussparung
- 5: Erste Dichtkante
- 6: Randbereich
- 7: Dichtfläche
- 8: Zweite Dichtkante
- 9: Oberseite
- 10: Unterseite
- 11: Steuerfläche der Aussparung
- 12: Dichtungsventilanordnung
- 13: Gehäusewand
- 14: Dichtkegel
- 15: Steuerkanal
- 16: Sicherungselement
- 17: Rand
- 18: Durchgangskanal
- 19: Anlagefläche
- 20: Strömungsrichtung
- 21: Strömungsrichtung
- 22: Strömungsrichtung
- 23: Strömungsrichtung

## Patentansprüche

1. Dichtungsventilanordnung (12) für einen ein Fluid enthaltenden Behälter, über dessen Fluidaufnahmeraum (13') ein Stützelement (14) mit einem Steuerkanal (15) im Randbereich des Stützelements (14) und ein Sicherungselement (16) mit einem Durchgangskanal (18) übereinander angeordnet sind, wobei zwischen dem Stützelement (14) und dem Sicherungselement (17) ein Dichtungsventil (1) aus einem gummielastischen Material mit einer gegenüber diesen Elementen (14, 16) kleineren radialen Erstreckung und mit einem Ventilkanal (2) zur Verbindung des Steuerkanals (15) und des Durchgangskanals (18) vorgesehen ist, wobei das Dichtungsventil (1) an seiner Oberseite eine erste Dichtfläche oder-kante (5) zur Abdichtung des Durchgangskanals (18) gegenüber dem Steuerkanal (15) und an seiner Unterseite eine zweite Dichtfläche oder -kante (8) zur Abdichtung des Ventilkanals (2) gegenüber dem Steuerkanal (15) aufweist, **dadurch gekennzeichnet, dass** unterhalb der ersten Dichtkanten (5) Materialaussparungen (4) zur Materialschwächung des Dichtungsventils (1) und zur federnden Anlage der ersten Dichtkanten (5) und der zweiten Dichtfläche oder -kante (8) vorgesehen sind.

2. Dichtungsventilanordnung nach Anspruch 1, **dadurch gekennzeichnet, dass** das Stützelement durch einen Dichtkegel (14) mit Schrägflächen ausgebildet ist, an denen die zweite Dichtkante (8) aufsetzbar ist.

3. Dichtungsventilanordnung nach Anspruch 1 oder 2, **dadurch gekennzeichnet, dass** das Stützelement (14) beidseitig seiner Mittelachse jeweils einen Steuerkanal (15) aufweist.

## Claims

1. Sealing valve arrangement (12) for a container containing a fluid, wherein a supporting element (14) comprising a control channel (15) in the border region of the supporting element (14) and a securing element (16) comprising a passage channel (18) are disposed on top of one another above the fluid storage (13') of the container, wherein a sealing valve (1) of a rubber-elastic material having smaller radial dimensions than the elements (14,16) and having a valve channel (2) for connecting the control channel (15) and the passage channel (18) is provided between the supporting element (14) and the securing element (17), wherein the sealing valve (1) comprises on its upper side a first sealing surface or edge (5) for sealing the passage channel (18) against the control channel (15), and comprises on its bottom side a second sealing surface or edge (8) for sealing the valve channel (2) against the control channel (15), **characterized in that** recesses (4) are provided in the material below the first sealing edges (5) for weakening the material of the sealing valve (1) and for resilient abutment of the first sealing edges (5) and second sealing surface or edge (8).

2. Sealing valve arrangement according to claim 1, **characterized in that** the supporting element is formed by a sealing cone (14) having inclined surfaces onto which the second sealing edge (8) can be disposed.

3. Sealing valve arrangement according to claim 1 or 2, **characterized in that** one control channel (15) is disposed on each side of the central axis of the supporting element (14).

## Revendications

1. Système de clapet d'étanchéité (12) pour un réservoir contenant un fluide, au-dessus de la chambre de réception du fluide (13') duquel sont agencés l'un sur l'autre un élément de support (14), avec un conduit de commande (15) dans la zone de bordure de l'élément de support (14), et un élément de sécurité (16) avec un conduit de passage (18), entre l'élément de support (14) et l'élément de sécurité (17) étant prévu un clapet d'étanchéité (1) en matériau élastique avec une cote radiale plus petite que celle de ces éléments (14, 16) et comportant un conduit (2) par lequel le conduit de commande (15) communique avec le conduit de passage (18), le clapet d'étanchéité (1) ayant sur son côté supérieur un premier bord ou face d'étanchéité (5) destiné à assurer l'étanchéité du conduit de passage (18) par rapport au conduit de commande (15) et ayant sur son côté inférieur un deuxième bord ou face d'étanchéité (8) destiné à assurer l'étanchéité du conduit du clapet (2) par rapport au conduit de commande (15), **caractérisé en ce que** des évidements (4) sont prévus en dessous des premiers bords d'étanchéité (5) en vue d'affaiblir le matériau du clapet d'étanchéité (1) et à fournir un appui flexible aux premiers bords d'étanchéité (5) et aux deuxièmes bords ou faces d'étanchéité (8).

2. Système de clapet d'étanchéité selon la revendication 1, **caractérisé en ce que** l'élément de support est formé par un cône d'étanchéité (14) avec des faces inclinées sur lesquelles peut être posé le deuxième bord d'étanchéité (8).

3. Système de clapet d'étanchéité selon la revendication 1 ou 2, **caractérisé en ce que** l'élément de support (14) comporte, de part et d'autre de son axe médian, respectivement un conduit de commande (15).
